# EUROPÄISCHE PATENTSCHRIFT

(11) **EP 3 884 172 B1**
(45) Veröffentlichungstag und Bekanntmachung des Hinweises auf die Patenterteilung: **08.01.2025**
(21) Anmeldenummer: 19805266.4
(22) Anmeldetag: 15.11.2019
(51) Int. Cl.: F16B 5/01, F16B 5/10, F16B 21/04, F16B 5/06

(54) **HALTENOCKEN UND SCHNELLVERSCHLUSSSYSTEM HIERMIT**
RETAINING CAM AND RAPID CLOSURE SYSTEM THEREWITH
CAME DE MAINTIEN ET SYSTÈME DE FERMETURE RAPIDE ÉQUIPÉ DE CELLE-CI

(30) Priorität: 23.11.2018 DE 202018106670 U
(43) Veröffentlichungstag der Anmeldung: 29.09.2021
(73) Patentinhaber: Fairchild Fasteners Europe - Camloc GmbH, 65779 Kelkheim (Taunus) (DE)
(72) Erfinder: JÜLING, Dieter, 65779 Kelkheim (DE); AULBACH, Johannes, 65510 Idstein (DE)
(74) Vertreter: Keil & Schaafhausen Patentanwälte PartGmbB
(86) Internationale Anmeldenummer: PCT/EP2019/081457
(87) Internationale Veröffentlichungsnummer: WO 2020/104313

(56) Entgegenhaltungen:
- US-A- 3 504 723
- US-A- 4 128 923
- US-A- 4 973 208

## Beschreibung

Die Erfindung betrifft einen Haltenocken, insbesondere für einen Schnellverschlusssystem sowie ein Schnellverschlusssystem mit einem solchen Haltenocken.

Aus der DE 44 11 519 C1 ist ein Gewindeeinsatz zur Befestigung in einer Platte bekannt, bei dem ein inneres Gewindeteil, das eine zentrale Gewindeöffnung zur Aufnahme einer Schraube aufweist, auswechselbar in einem Gehäuse befestigt wird, indem das Gewindeteil in das Gehäuse eingesteckt und zu diesem verdreht wird. Derartige Gewindeeinsätze haben gegenüber Nockeneinsätzen den Nachteil, dass meist mehrere Umdrehungen erforderlich sind, um eine Schraubverbindung zu lösen. Insbesondere für Wartungsklappen oder dgl., die schnell und regelmäßig geöffnet und verschlossen werden müssen, sind Gewindeeinsätze daher ungeeignet. Ein Nachteil bei dem Gewindeeinsatz der DE 44 11 519 C1 sind zudem die relativ große Bauhöhe sowie eine über die Schraubverbindung nur schwer einstellbare Vorspannung.

Zum schnellen Befestigen und Lösen von Plattenelementen, Deckeln und Wartungsklappen ist es bekannt, sogenannte Schnellverschlüsse einzusetzen. Häufig sind solche Schnellverschlüsse sogenannte ¼-Drehverschlüsse, die sich mit einer annähernd 90°-Drehung öffnen und schließen lassen. Derartige Schnellverschlüsse bestehen ähnlich einer Schraube aus einem Zapfenelement, das auch als Zapfen oder Stud bezeichnet wird, und einem Gegenstück, ähnlich einer Mutter, das als Haltenocken oder Receptacle bezeichnet wird.

Das Dokument US 3 504 723 beschreibt einen Befestigungseinsatz zum Einsetzen von Leichtbauplatten, wobei eine Mutter als Befestigungselement schwimmend in einer Bohrung gelagert wird. Dabei sind sowohl die Mutter als auch die Bohrung quadratisch ausgeführt, wobei die Mutter von geringerer Größe als die Bohrung ist, um eine Ausrichtung der Mutter zu einer Befestigungsschraube zu ermöglichen.

Das Dokument US 4 128 923 A beschreibt ein Befestigungsmittel mit einem Gehäuseteil, einer Bolzenaufnahme, einer Feder und einer Halterung zur schnellen lösbaren Befestigung eines Paares von übereinanderliegenden Plattenelementen. Das Befestigungsmittel kann von einem quadratisches Loch einer Platte aufgenommen werden, wobei eine weitere Platte über einen Bolzen, der in die Bolzenaufnahme greift und dort verriegelt, befestigt werden kann.

Um eine Verriegelung zu ermöglichen, ist in einem der beiden Elemente eine meist bajonettähnliche Rampe integriert, um durch eine Drehung des Zapfens einen Schließhub zu realisieren. Um eine häufig erforderliche Vorspannung zu erzeugen und Toleranzen in der Klemmdicke auszugleichen, ist zudem noch ein Federelement erforderlich, welches sich wahlweise auf der Seite des Zapfenelements oder der Seite des Haltenockens befinden kann.

Die Haltenocken können wahlweise durch Schweißen, Nieten, Kleben, Schrauben oder Clipsen an einem Trägerbauteil befestigt werden. So ist beispielsweise aus der DE 20 2017 101 870 U1 ein solcher Haltenocken bekannt, der in eine, ggf. mit einem Innengewinde versehene, Bohrungen eines ersten Bauteils eingeschraubt werden kann, bis ein Auflageflansch des Haltenockens auf dem die Bohrung umgebenden Rand des Bauteils aufliegt. Ein anderer Anwendungsfall ist in der DE 20 2018 100 634 U1 beschrieben, wobei der Drehverschluss zur lösbaren Verriegelung zweier plattenförmiger Bauteile einen der Haltenocken und ein Verriegelungselement aufweist, die von der Unterseite an einem der plattenförmigen Bauteile befestigt werden können.

Im Leichtbau werden häufig plattenartige Elemente eingesetzt, die in Sandwichbauweise aus, z.B. faserverstärkten, Deckschichten und einer dazwischen liegenden Wabenstruktur bestehen. Mit den bekannten Lösungen ist es nicht oder nur sehr aufwändig möglich, bei derartigen Wabenplatten Schnellverschlüsse der oben genannten Art vorzusehen. Eine besondere Herausforderung besteht zudem darin, die Ausführung so flach wie möglich zu gestalten, um den Leichtbauanforderungen Rechnung zu tragen, und zum anderen eine Ausführungsform zu finden, bei der die zu befestigende Platte so dünn wie möglich ausgeführt werden kann.

Aufgabe der vorliegenden Erfindung ist es daher, einen Haltenocken für ein Schnellverschlusssystem bereitzustellen, der zuverlässig in einer Wabenplatte befestigt werden kann. Erfindungsgemäß ist in den Haltenocken eine Feder integriert.

Erfindungsgemäß besteht der Haltenocken aus einem Gehäuse, das gegebenenfalls einen separaten Deckel aufweisen kann, und dem innenliegenden Nocken. Zur Lösung der Aufgabe wird ein Haltenocken mit einem Nockenelement vorgeschlagen, das eine Öffnung entlang einer Längsachse aufweist und das auf seiner Außenseite wenigstens bereichsweise eine Führungskontur und auf seiner Innenseite eine Innenkontur zur Verbindung mit einem Verschlusszapfen aufweist. Der Haltenocken weist weiter ein zumindest näherungsweise hülsenförmiges Gehäuse auf, das auf seiner Außenseite wenigstens bereichsweise eine Befestigungskontur zur Verankerung in einer Bohrung eines Bauteils und auf seiner Innenseite wenigstens bereichsweise eine Führungskontur für das Nockenelement aufweist. Nach der Erfindung ist die Befestigungskontur nicht-rotationssymmetrisch und mit wenigstens einem radialen Vorsprung ausgebildet. Dies dient einer rotatorischen und axialen Abstützung in der Wabenplatte oder einem vergleichbaren plattenförmigen Bauteil. Weiter können die Führungskonturen des Nockenelements und des Gehäuses nicht-rotationssymmetrisch und derart ausgebildet und aneinander angepasst sein, dass das Nockenelement innerhalb des Gehäuses in Richtung der Längsachse und senkrecht hierzu begrenzt bewegbar geführt ist. Die Bewegbarkeit entlang der Längsachse ermöglicht es, das Nockenelement innerhalb des Gehäuses federnd zu führen, wodurch eine Vorspannung erzeugt werden kann und Toleranzen in der Klemmdicke ausgeglichen werden können. Die Bewegbarkeit quer zur Längsachse ermöglicht es, dass das Nockenelement innerhalb des Gehäuses zu einer Öffnung in der mit dem Schnellverschluss zu befestigenden Platte oder dergleichen ausgerichtet werden kann. Dies ist insbesondere dann von Vorteil, wenn der Zapfen mit einem Senkkopf ausgeführt ist. In dieser Bauweise kann die zu befestigende Platte möglichst dünn ausgeführt werden, zudem vermeidet man einen überstehenden Kopf, was besonders ergonomisch ist. Der Nachteil dieser Ausführungsform, dass durch den Senkkopf kein seitlicher Toleranzausgleich durch den Zapfen möglich ist, wird ausgeglichen, indem der seitliche Toleranzausgleich im Haltenocken realisiert ist.

Zum Öffnen und Schließen des Schnellverschlusssystems muss der Zapfen relativ zu dem Nockenelement verdreht werden. Damit das Nockenelement nicht in dem Gehäuse von dem Zapfen mitgedreht wird, sind die Führungskonturen des Nockenelements und des Gehäuses in einer zur Längsachse senkrechten Ebene vorzugsweise mehreckig, insbesondere dreieckig. Wesentlich ist, dass die Führungskonturen des Nockenelements und des Gehäuses nicht-rotationssymmetrisch sind, jedoch eine Relativbewegung dieser beiden Elemente erlauben. Alternativ oder zusätzlich kann die Führungskontur des Nockenelements in der Führungskontur des Gehäuses senkrecht zur Längsachse mit einer Spielpassung geführt sein. Mit anderen Worten sind das Nockenelement und das Gehäuse so ausgeführt, dass das Nockenelement im Gehäuse seitliches Spiel hat, um den Toleranzausgleich in der Ebene quer zur Längsachse zu realisieren, andererseits aber die erforderlichen Drehmomente beim Öffnen und Schließen in jeder Position abstützen kann. Dieses wird bevorzugt durch eine dreieckige Kontur realisiert, die mit einer entsprechenden dreieckeigen Gegenkontur im Gehäuse korrespondiert.

Um eine möglichst flache Bauweise zu realisieren, wird der untere Boden des Nockenelements radial nach außen geführt, so dass eine Auflagefläche für ein Federelement entsteht. Die Blocklänge der Feder wird durch die Höhe des Nockenelements kompensiert und erfordert keine zusätzliche Bauhöhe. An den drei Ecken der Fläche erstecken sich Stege in axialer Richtung nach oben, d.h. in Richtung zu dem Zapfen. Die Stege an den Ecken der Dreiecksfläche dienen der Führung des Nockenelements in dem Gehäuse in axialer Richtung und verhindern ein Verkanten während des Hubes beim Öffnen oder Schließen. Mit anderen Worten ist nach einem erfindungsgemäßen Aspekt der

Erfindung ein Federelement, beispielsweise eine Spiralfeder, zwischen dem Nockenelement und dem Gehäuse vorgesehen, die das Nockenelement umgibt Dabei ist die Blockhöhe des Federelements kleiner oder gleich der Höhe des Nockenelements. Hierdurch lässt sich eine besonders geringe Bauhöhe des Haltenockens erzielen, ohne auf die durch die Feder bewirkte Vorspannung beim Verriegeln zu verzichten.

Nach einer Ausführungsform der Erfindung weist das Nockenelement wenigstens einen, insbesondere drei, in Richtung der Längsachse verlaufenden Steg auf, wobei das Gehäuse einen radial nach innen vorstehenden Flansch aufweist, um die Bewegung des Nockenelements innerhalb des Gehäuses in Richtung der Längsachse zu begrenzen.

Auch die Befestigungskontur kann in einer zur Längsachse senkrechten Ebene mehreckig, insbesondere dreieckig, sein. Hierbei ist die Befestigungskontur beispielsweise an den einander in Richtung der Längsachse gegenüberliegenden Stirnseiten des Gehäuses jeweils mit einem flanschartigen radialen Vorsprung ausgebildet. Einer der flanschartigen radialen Vorsprünge kann dabei mit wenigstens einer, insbesondere mit zwei, Öffnung versehen sein. Dies ermöglicht es, dass der Haltenocken durch Einkleben (Vergießen) in die Wabenplatte befestigt wird. Hierzu ist vorzugsweise ausgehend von einer Öffnung in dem flanschartigen radialen Vorsprung zwischen den flanschartigen radialen Vorsprüngen ein nach außen offener, ringförmiger Kanal ausgebildet, in den eine aushärtbare Vergussmasse so eingefüllt werden kann, dass sie das Gehäuse mit der Wabenplatte verbindet.

Diese Montage des Haltenockens kann dadurch weiter erleichtert werden, dass dem Gehäuse eine auf diesem lösbar befestigbare Abdeckung (Pad) zugeordnet ist, die einseitig mit einer Klebeschicht versehen ist. Die Abdeckung kann mit zwei Durchgangsöffnungen versehen sein, die insbesondere fluchtend mit den Öffnungen in den flanschartigen radialen Vorsprüngen überdeckend ist.

Ein Montageverfahren für den Haltenocken in einer Wabenplatte oder dergleichen kann dann erfindungsgemäß folgende Schritte aufweisen: Zunächst wird der Haltenocken mit einem sogenannten Pad, d.h. der Abdeckung, versehen, welcher eine einseitige Klebeschicht aufweist. Der vormontierte Haltenocken mit Gehäuse, Nockenelement und einem Federelement wird dann in die Wabenplattenbohrung einsetzten und das Pad wird mit der Klebeschicht auch auf die Oberfläche der Wabenplatte zur Abdichtung aufgeklebt. Anschließend wird eine Vergussmasse in ein Loch des Pads eingefüllt, bis die Vergussmasse auf der anderen Seite herauskommt. Nach einer kurzen Aushärtezeit wird das Pad abgezogen.

Das Austreten der Vergussmasse dient als Indikator, dass der gesamte Hohlraum, d.h. der nach außen offene, ringförmige Kanal, ausgefüllt ist. Das Pad dient zudem als Schutz damit keine Vergussmasse auf das Bauteil gelangt.

Für einige Anwendungsfälle wird es bevorzugt, wenn die zu verbindenden Bauteile mittels Federkraft miteinander verklemmt werden. Ein solches Federelement wirkt nicht nur einem unbeabsichtigten Öffnen des Schnellverschlusssystems entgegen, sondern kann auch Vibrationen zwischen den miteinander zu verbindenden Bauteilen dämpfen. Grundsätzlich kann ein Federelement an dem Zapfen vorgesehen sein. Um die an der Wabenplatte zu befestigende Platte jedoch besonders dünn gestalten zu können, ist erfindungsgemäß zwischen dem Gehäuse und dem Nockenelement eine Feder in dem Haltenocken vorgesehen. Hierzu ist das Nockenelement beispielsweise mit einer radial vorspringenden Auflagefläche versehen, an der sich die Feder abstützt.

Ein Schnellverschlusssystem nach der vorliegenden Erfindung weist einen Haltenocken der oben genannten Art sowie einen Verschlusszapfen auf, der zur Verbindung mit der Innenkontur des Haltenockens eine entsprechende Gegenkontur, bspw. eine Außenkontur, aufweist. Weiter ist der Verschlusszapfen vorzugsweise mit einem flanschartigen Auflagebereich versehen, mit dem der Verschlusszapfen sich direkt oder indirekt an einem weiteren Bauteil abstützen kann.

Nach einer bevorzugten Ausführungsform der Erfindung ist der flanschartige Auflagebereich des Verschlusszapfens auf der der Gegen- oder Außenkontur zugewandten Seite konisch ausgebildet, d.h. der Zapfen ist mit einem Senkkopf ausgeführt, damit die zu befestigende Platte möglichst dünn ausgeführt werden kann und der Kopf des Zapfens nicht übersteht, was ergonomischer ist.

Die Außen- oder Gegenkontur des Verschlusszapfens kann wenigstens einen radial von einem Zapfenbereich vorspringenden Nocken bzw. Kreuzstift oder ein Gewinde aufweisen.

Die Erfindung wird nachfolgend auch unter Bezugnahme auf die beigefügten Zeichnungen näher erläutert. Es zeigen schematisch:
- Figur 1: in teilweise geschnittener Ansicht ein Schnellverschlusssystem nach einer Ausführungsform der Erfindung im nicht verbundenen Zustand,
- Figur 2: in Perspektivansicht den Haltenocken des Schnellverschlusssystems nach Figur 1 zusammen mit einer Abdeckung;
- Figur 3: in teilweise geschnittener Ansicht den Haltenocken nach Figur 2 zusammen mit der Abdeckung und einem Werkzeug vor der Montage in einem Bauteil;
- Figur 4a: in Perspektivansicht das Bauteil mit der Abdeckung nach Figur 2;
- Figur 4b: in Schnittansicht das Bauteil mit der Abdeckung nach Figur 2 während des Befestigens des Haltenocken in dem Bauteil;
- Figur 4c: in Perspektivansicht das Bauteil nach Befestigung des Haltenockens;
- Figur 4d: in Schnittansicht das Bauteil nach Befestigung des Haltenockens;
- Figur 5a: in Perspektivansicht den Haltenocken aus Figur 1;
- Figur 5b: in Explosionsansicht den Haltenocken nach Figur 5a;
- Figur 5c: in Schnittansicht den Haltenocken nach Figur 5a;
- Figur 5d: in weiterer Schnittansicht den Haltenocken nach Figur 5a;
- Figur 5e: in Draufsicht den Haltenocken nach Figur 5a;
- Figur 6a: in Perspektivansicht das Nockenelement des Haltenockens nach Figur 5a;
- Figur 6b: in weiterer Perspektivansicht das Nockenelement des Haltenockens nach Figur 5a;
- Figur 7a: in Schnittansicht das Schnellverschlusssystem nach Figur 1 in unverriegeltem Zustand; und
- Figur 7b: in Schnittansicht das Schnellverschlusssystem nach Figur 1 in verriegeltem Zustand.

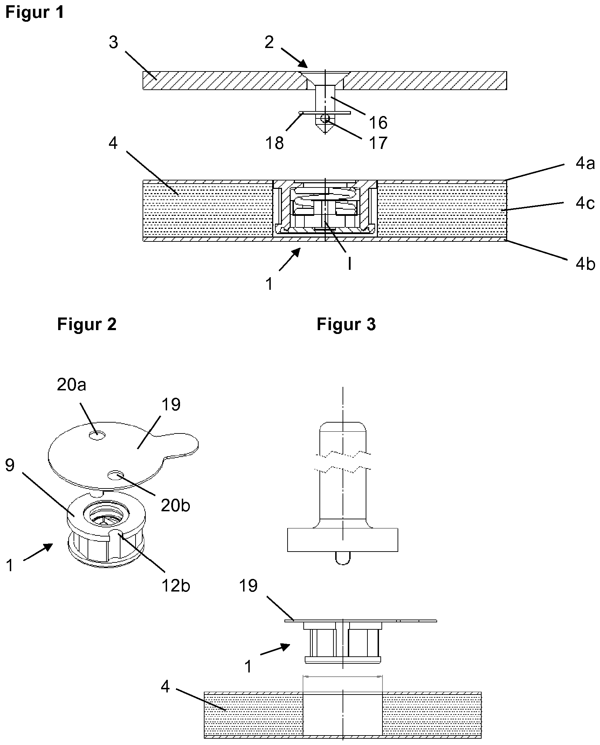

In Figur 1 ist ein Schnellverschlusssystem mit einem erfindungsgemäßen Haltenocken 1 und einem Verschlusszapfen 2 dargestellt, um zwei plattenförmigen Bauteile 3, 4 miteinander zu verbinden. Das in Figur 1 oberer Bauteil 3 ist eine beispielsweise dünne Platte, wie eine Klappe oder dergleichen, während das in der Figur untere Bauteil 4 eine sogenannte Wabenplatte ist, die aus zwei Deckschichten 4a, 4b und einer dazwischen angeordneten Wabenstruktur 4c besteht. Mittels des Schnellverschlusssystems kann das Bauteil 3 lösbar an dem Bauteil 4 befestigt werden.

Zur Aufnahme des Schnellverschlusssystems weist das Bauteil 3 eine Senkbohrung und das Bauteil 4 ein Sackloch auf. Der Verschlusszapfen 2 ist mit einem Senkkopf ausgebildet und schließt in dem dargestellten Beispiel bündig mit der Oberfläche des Bauteils 3 ab. Das Sackloch in dem Bauteil 4 ist in der in der Figur oberen Deckschicht 4a sowie der Wabenstruktur 4c vorgesehen, wogegen die untere Deckschicht 4b in dem gezeigten Beispiel geschlossen ist.

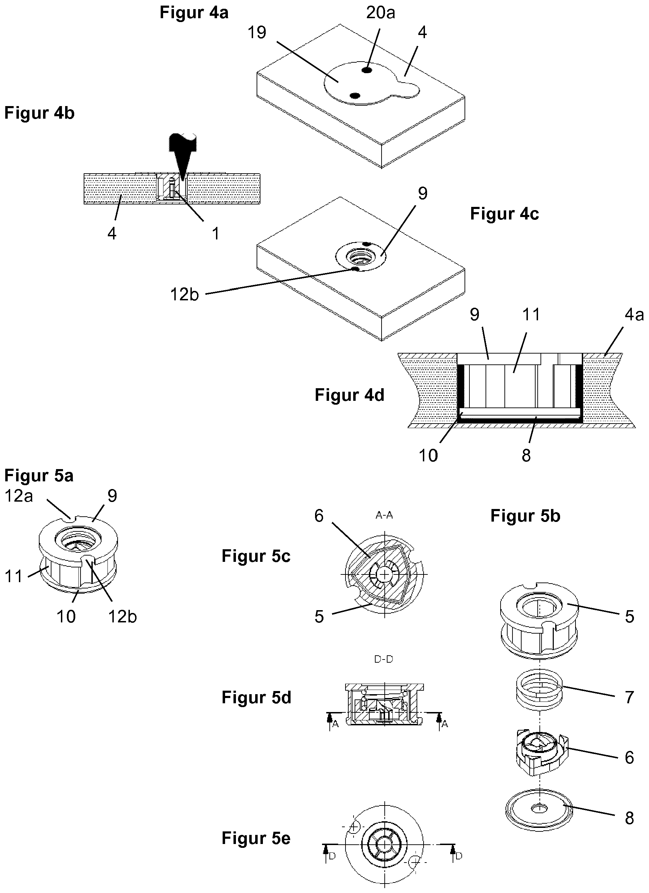

Die Figuren 5a bis 5e zeigen den Aufbau des Haltenockens 1, der im Wesentlichen aus einem Gehäuse 5 und einem Nockenelement 6 besteht. Erfindungsgemäß ist in dem Haltenocken 1 zusätzlich eine Feder 7 vorgesehen, die zwischen dem Gehäuse 5 und dem Nockenelement 6 angeordnet ist. Zusätzlich ist in dem dargestellten Beispiel ein separater Deckel 8 gezeigt, der fest oder lösbar mit dem Gehäuse 5 verbindbar ist.

Das Gehäuse 5 ist hülsenartig aufgebaut mit einem in den Figuren oberen Flansch 9, einem unteren Flansch 10 und einer Außenmantelfläche 11, die zwischen dem oberen Flansch 9 und dem unteren Flansch 10 vorgesehen ist. Die Außenmantelfläche 11 ist nicht-rotationssymmetrisch und hat in dem dargestellten Beispiel eine im Schnitt nach Figur 5c näherungsweise dreieckige Form.

In dem oberen Flansch 9 sind zwei Öffnungen 12a, 12b vorgesehen, wogegen der untere Flansch 10 keine solche Öffnung aufweist. In axialer Verlängerung der Öffnungen 12a, 12b kann eine Nut in der Außenmantelfläche 11 ausgebildet sein, wie dies in dem dargestellten Beispiel gezeigt ist. Der gegenüber dem Flansch 9 und dem Flansch 10 radial nach innen zurückgesetzte Bereich definiert einen nach außen offenen, ringförmigen Kanal, der eine Befestigungskontur für das Gehäuse 5 bildet.

Der Flansch 9 steht auch radial in das Innere des Gehäuses 5 vor, um eine Anlagefläche für die Feder 7 zu bilden und begrenzt eine kreisförmige Öffnung, durch die der Verschlusszapfen 2 eingeführt werden kann. Der Deckel 8 kann mit dem Gehäuse 5 bzw. dem unteren Flansch 10 fest verbunden sein.

Die Innenmantelfläche des Gehäuses 5 ist nicht-rotationssymmetrisch ausgebildet und in dem dargestellten Beispiel als eine etwa dreieckige Führungskontur gestaltet.

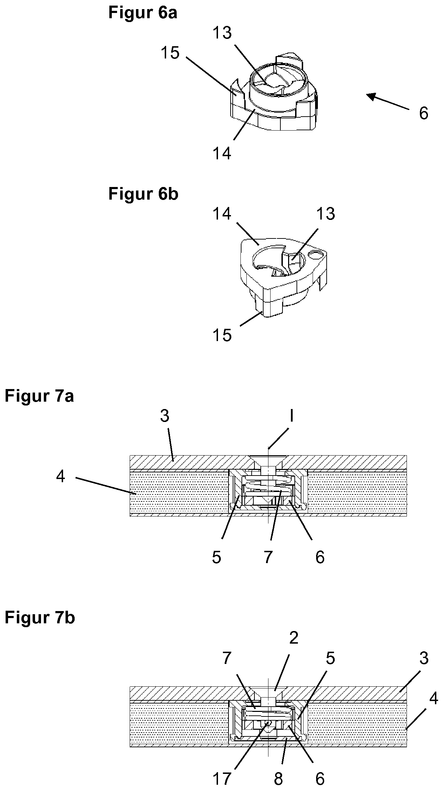

Das Nockenelement 6, das auch in den Figuren 6a und 6b im Detail dargestellt ist, umschließt eine Öffnung und weist eine Innenkontur 13 mit rampenartigen Flächen bzw. Nocken zur Verbindung mit dem Verschlusszapfen 2 auf. Ein radialer Vorsprung 14 ist nicht-rotationssymmetrisch ausgebildet und in dem dargestellten Beispiel als eine etwa dreieckige Führungskontur gestaltet, die an die Führungskontur des Gehäuses 5 angepasst ist. Die Führungskonturen sind dabei so gestaltet, dass das Nockenelement 6 mit Spiel in dem Gehäuse 5 geführt ist, so dass eine begrenzte seitliche Bewegung quer zu einer Längsachse I des Nockenelements 6 zugelassen wird. Gleichzeitig ist eine minimale relative Verdrehung des Nockenelements 6 in dem Gehäuse 5 möglich, wobei jedoch eine nennenswerte relative Drehung durch die nicht-rotationssymmetrisch ausgebildeten Führungskonturen verhindert wird.

An den drei Ecken des radialen Vorsprungs 14 ist jeweils ein Steg 15 vorgesehen, der sich parallel zu der Längsachse I erstreckt und einem Verkanten des Nockenelements 6 in dem Gehäuse 5 entgegenwirkt. Zudem begrenzen die Stege 15 die axiale Bewegung des Nockenelements 6 innerhalb des Gehäuses 5 gegen die Kraft der Feder 7.

Der Verschlusszapfen 2 weist einen radial von einem Zapfenbereich 16 vorspringenden Nocken 17, z.B. einen Kreuzstift, auf, der durch das Nockenelement 6 geführt und durch eine Drehung relativ zu dem Nockenelement 6, beispielsweise um etwa 90°, mit diesem verriegelt bzw. entriegelt werden kann. Ein Vergleich der Figuren 7a und 7b zeigt dabei, wie das Nockenelement 6 in der verriegelten Position (Figur 7b) gegenüber der entriegelten Position (Figur 7a) in dem Gehäuse 5 zu dem Bauteil 3 (in den Figuren nach oben) gezogen wird und hierbei die Feder 7 komprimiert wird. In dem dargestellten Beispiel ist an dem Verschlusszapfen 2 weiter einer Scheibe 18 vorgesehen, die den Zapfenbereich 16 auf der dem Senkkopf zugewandten Seite des Nocken 17 umgibt.

Die Befestigung des Haltenockens 1 innerhalb der Wabenplatte 4 wird nachfolgend unter Bezugnahme auf die Figuren 2 bis 4d erläutert. In die Wabenplatte 4 kann ein Haltenocken nicht ausreichend fest eingeschraubt werden. In der dargestellten Ausführungsform wird der Haltenocken 1 daher mittels einer aushärtbaren Vergussmasse in der Wabenplatte 4 fixiert. Hierzu wird zunächst eine in Figur 2 gezeigte Abdeckung 19 in Form eines Pads auf dem Haltenocken 1 befestigt und der Haltenocken 1 anschließend zusammen mit der Abdeckung 19 in das Sackloch des Bauteils 4 eingesetzt. Hierzu kann das in Figur 3 angedeutete Werkzeug verwendet werden. Alternativ hierzu ist es auch möglich, die Abdeckung 19 erst aufzubringen, nachdem der Haltenocken 1 in das Bauteil 4 eingesetzt ist.

Die Abdeckung 19 ist mit zwei Durchgangsöffnungen 20a und 20b versehen, die so positioniert sind, dass sie mit den Öffnungen 12a bzw. 12b in dem Flansch 9 des Gehäuses 5 fluchten können. Die Abdeckung 19 kann beispielsweise als eine einseitig selbstklebend Folie ausgestaltet sein, um leicht auf dem Haltenocken 1 befestigt und von diesem wieder abgelöst zu werden. Die Abdeckung 19 kann seitlich über den Flansch 9 des Gehäuses überstehen und mit der Oberfläche des Bauteils 4 verklebt werden. Dieser Zustand ist in Figur 4a gezeigt.

Anschließend kann eine Vergussmasse wie in Figur 4b angedeutet durch eine der Öffnungspaare 20a und 12a bzw. 20b und 12b in den ringförmigen Raum zwischen dem Flansch 9 und dem Flansch 10 eingefüllt werden. Gleichzeitig dringt die Vergussmasse aus dem nach außen offenen ringförmigen Raum in die Wabenstruktur 4c ein und verankert das Gehäuse 5 axial und rotatorisch innerhalb des Bauteils 4. Die Vergussmasse kann auch wie in Figur 4d gezeigt einen Bereich zwischen dem Deckel 8 und der unteren Deckschicht 4b der Wabenplatte 4 füllen. Luft kann aus dem anderen Öffnungspaar 20b und 12b bzw. 20a und 12a entweichen. Wenn der Haltenocken 1 vollständig umgossen ist, tritt die Vergussmasse aus dem anderen Öffnungspaar 20b und 12b bzw. 20a und 12a aus, so dass keine weitere Vergussmasse nachgefüllt werden muss. Nach dem Aushärten der Vergussmasse ist der Haltenocken 1 dann fest in dem Bauteil 4 verankert. Figur 4c zeigt diesen Zustand nach Entfernen der Abdeckung 19.

### Bezugszeichen:

- 1: Haltenocken
- 2: Verschlusszapfen
- 3: Bauteil
- 4: Bauteil (Wabenplatte)
- 4a, b: Deckschicht
- 4c: Wabenstruktur
- 5: Gehäuse
- 6: Nockenelement
- 7: Feder
- 8: Deckel
- 9: Flansch
- 10: Flansch
- 11: Außenmantelfläche
- 12a, b: Öffnung
- 13: Innenkontur
- 14: radialer Vorsprung
- 15: Steg
- 16: Zapfenbereich
- 17: Nocken
- 18: Scheibe
- 19: Abdeckung
- 20a, b: Durchgangsöffnung

- I: Längsachse

## Patentansprüche

1. Haltenocken, insbesondere für ein Schnellverschlusssystem, mit einem Nockenelement (6), das eine Öffnung entlang einer Längsachse (l) aufweist und das auf seiner Außenseite wenigstens bereichsweise eine Führungskontur (14) und auf seiner Innenseite eine Innenkontur (13) zur Verbindung mit einem Verschlusszapfen (2) aufweist, und einem zumindest näherungsweise hülsenförmigen Gehäuse (5), das auf seiner Außenseite wenigstens bereichsweise eine Befestigungskontur (9, 10, 11) zur Verankerung in einer Bohrung eines Bauteils (4) und auf seiner Innenseite wenigstens bereichsweise eine Führungskontur für das Nockenelement (6) aufweist, wobei die Befestigungskontur (9, 10, 11) nicht-rotationssymmetrisch und mit wenigstens einem radialen Vorsprung (9, 10) ausgebildet ist, wobei die Führungskonturen (14) des Nockenelements (6) und des Gehäuses (5) nicht-rotationssymmetrisch und derart ausgebildet und aneinander angepasst sind, dass Nockenelement (6) innerhalb des Gehäuses (5) in Richtung der Längsachse (l) und senkrecht hierzu begrenzt bewegbar geführt ist, und wobei zwischen dem Gehäuse (5) und dem Nockenelement (6) eine Feder (7) vorgesehen ist, die das Nockenelement (6) umgibt, **dadurch gekennzeichnet, dass** die Feder (7) eine Blockhöhe kleiner oder gleich der Höhe des Nockenelements (6) aufweist.

2. Haltenocken nach Anspruch 1, **dadurch gekennzeichnet, dass** die Führungskonturen (14) des Nockenelements (6) und des Gehäuses (5) in einer zur Längsachse (l) senkrechten Ebene mehreckig, insbesondere dreieckig, sind.

3. Haltenocken nach Anspruch 1 oder 2, **dadurch gekennzeichnet, dass** die Führungskontur (14) des Nockenelements (6) in der Führungskontur des Gehäuses (5) senkrecht zur Längsachse (l) mit einer Spielpassung geführt ist.

4. Haltenocken nach einem der vorhergehenden Ansprüche, **dadurch gekennzeichnet, dass** das Nockenelement (6) wenigstens einen, insbesondere drei, in Richtung der Längsachse (l) verlaufenden Steg (15) aufweist, und dass das Gehäuse (5) einen radial nach innen vorstehenden Flansch (9) aufweist.

5. Haltenocken nach einem der vorhergehenden Ansprüche, **dadurch gekennzeichnet, dass** die Befestigungskontur (9, 10, 11) in einer zur Längsachse (l) senkrechten Ebene mehreckig, insbesondere dreieckig, ist.

6. Haltenocken nach einem der vorhergehenden Ansprüche, **dadurch gekennzeichnet, dass** die Befestigungskontur (9, 10, 11) an den einander in Richtung der Längsachse (l) gegenüberliegenden Stirnseiten des Gehäuses (5) jeweils mit einem flanschartigen radialen Vorsprung (9, 10) ausgebildet ist.

7. Haltenocken nach Anspruch 6, **dadurch gekennzeichnet, dass** einer der flanschartigen radialen Vorsprünge (9) mit wenigstens einer, insbesondere mit zwei, Öffnung (12a, 12b) versehen ist.

8. Haltenocken nach den Ansprüchen 6 und 7, **dadurch gekennzeichnet, dass** ausgehend von einer Öffnung (12a, 12b) in dem flanschartigen radialen Vorsprung (9) zwischen den flanschartigen radialen Vorsprüngen (9, 10) ein nach außen offener, ringförmiger Kanal ausgebildet ist.

9. Haltenocken nach einem der vorhergehenden Ansprüche, **dadurch gekennzeichnet, dass** dem Gehäuse (5) eine auf diesem lösbar befestigbare Abdeckung (19) zugeordnet ist, die einseitig mit einer Klebeschicht versehen ist.

10. Haltenocken nach Anspruch 9, **dadurch gekennzeichnet, dass** die Abdeckung (19) mit zwei Durchgangsöffnungen (20a, 20b) versehen ist.

11. Haltenocken nach einem der vorhergehenden Ansprüche, **dadurch gekennzeichnet, dass** das Nockenelement (6) mit einer radial vorspringenden Auflagefläche (14) versehen ist, an der sich die Feder (7) abstützt.

12. Schnellverschlusssystem mit einem Haltenocken (1) nach einem der vorhergehenden Ansprüche und einem Verschlusszapfen (2), der zur Verbindung mit der Innenkontur (13) des Nockenelements (6) eine Gegen- oder Außenkontur (16, 17) sowie einen Auflagebereich aufweist.

13. Schnellverschlusssystem nach Anspruch 12, **dadurch gekennzeichnet, dass** der Auflagebereich des Verschlusszapfens (2) auf der der Gegen- oder Außenkontur (16, 17) zugewandten Seite konisch ausgebildet ist.

14. Schnellverschlusssystem nach Anspruch 12 oder 13, **dadurch gekennzeichnet, dass** die Gegen- oder Außenkontur des Verschlusszapfens (2) wenigstens einen radial von einem Zapfenbereich (16) vorspringenden Nocken (17) aufweist.

## Claims

1. Retaining cam, in particular for a rapid closure system, with a cam element (6) having an opening along a longitudinal axis (l) and having a guide contour (14) at least in some areas on its outer side and an inner contour (13) for connection to a closure pin (2) on its inner side, and an at least approximately sleeve-shaped housing (5) which has on its outer side, at least in some areas, a fastening contour (9, 10, 11) for anchoring in a bore of a component (4) and on its inner side, at least in some areas, a guide contour for the cam element (6), wherein the fastening contour (9, 10, 11) is non-rotationally symmetrical and is formed with at least one radial projection (9, 10), wherein the guide contours (14) of the cam element (6) and of the housing (5) are non-rotationally symmetrical and are formed and adapted to one another in such a manner, that the cam element (6) is guided within the housing (5) so as to be movable to a limited extent in the direction of the longitudinal axis (l) and perpendicular thereto, and wherein a spring (7) which surrounds the cam element (6) is provided between the housing (5) and the cam element (6), **characterized in that** the spring (7) has a block height less than or equal to the height of the cam element (6).

2. Retaining cam according to claim 1, **characterized in that** the guide contours (14) of the cam element (6) and of the housing (5) are polygonal, in particular triangular, in a plane perpendicular to the longitudinal axis (I).

3. Retaining cam according to claim 1 or 2, **characterized in that** the guide contour (14) of the cam element (6) is guided in the guide contour of the housing (5) perpendicular to the longitudinal axis (l) with a clearance fit.

4. Retaining cam according to one of the preceding claims, **characterized in that** the cam element (6) has at least one, in particular three, webs (15) extending in the direction of the longitudinal axis (l), and **in that** the housing (5) has a radially inwardly projecting flange (9).

5. Retaining cam according to one of the preceding claims, **characterized in that** the fastening contour (9, 10, 11) is polygonal, in particular triangular, in a plane perpendicular to the longitudinal axis (l).

6. Retaining cam according to one of the preceding claims, **characterized in that** the fastening contour (9, 10, 11) is formed with a flange-like radial projection (9, 10) on each of the end faces of the housing (5) that oppose each other in the direction of the longitudinal axis (I).

7. Retaining cam according to claim 6, **characterized in that** one of the flange-like radial projections (9) is provided with at least one, in particular two, openings (12a, 12b).

8. Retaining cam according to claims 6 and 7, **characterized in that**, starting from an opening (12a, 12b) in the flange-like radial projection (9), an outwardly open, annular channel is formed between the flange-like radial projections (9, 10).

9. Retaining cam according to one of the preceding claims, **characterized in that** the housing (5) is assigned a cover (19) which can be detachably fastened to the latter and is provided on one side with an adhesive layer.

10. Retaining cam according to claim 9, **characterized in that** the cover (19) is provided with two through openings (20a, 20b).

11. Retaining cam according to one of the preceding claims, **characterized in that** the cam element (6) is provided with a radially projecting support surface (14) on which the spring (7) is supported.

12. Rapid closure system with a retaining cam (1) according to one of the preceding claims and a closure pin (2) which has a mating or outer contour (16, 17) for connection to the inner contour (13) of the cam element (6) and a support area.

13. Rapid closure system according to claim 12, **characterized in that** the support area of the closure pin (2) on the side facing the mating or outer contour (16, 17) is conical.

14. Rapid closure system according to claim 12 or 13, **characterized in that** the mating or outer contour of the closure pin (2) has at least one cam (17) projecting radially from a pin region (16).

## Revendications

1. Came de maintien, en particulier pour un système de fermeture rapide, avec un élément de came (6), qui comporte une ouverture le long d'un axe longitudinal (l) et qui comporte sur sa face extérieure au moins par endroits un profil de guidage (14) et sur sa face intérieure un profil intérieur (13) pour la liaison avec un tourillon de fermeture (2) et un boîtier (5) au moins approximativement en forme de manchon, qui comporte sur sa face extérieure au moins par endroits un profil de fixation (9, 10, 11) pour ancrage dans un alésage d'un composant (4) et sur sa face intérieure au moins par endroits un profil de guidage pour l'élément de came (6), sachant que le profil de fixation (9, 10, 11) est constitué non symétrique en rotation et avec au moins une saillie radiale (9, 10), sachant que les profils de guidage (14) de l'élément de came (6) et du boîtier (5) sont constitués non symétriques en rotation et adaptés l'un à l'autre de telle manière que l'élément de came (6) est guidé à l'intérieur du boîtier (5) en direction de l'axe longitudinal (l) mobile de façon limitée perpendiculairement à celui-ci et sachant qu'un ressort (7) est prévu entre le boîtier (5) et l'élément de came (6), qui entoure l'élément de came (6), **caractérisée en ce que** le ressort (7) comporte une hauteur de blocage plus petite ou égale à la hauteur de l'élément de came (6).

2. Came de maintien selon la revendication 1, **caractérisée en ce que** les profils de guidage (14) de l'élément de came (6) et du boîtier (5) sont polygonaux, en particulier triangulaires dans un plan perpendiculaire à l'axe longitudinal (l).

3. Came de maintien selon la revendication 1 ou 2, **caractérisée en ce que** le profil de guidage (14) de l'élément de came (6) est guidé avec un ajustement avec jeu dans le profil de guidage du boîtier (5) perpendiculairement à l'axe longitudinal (l).

4. Came de maintien selon l'une quelconque des revendications précédentes, **caractérisée en ce que** l'élément de came (6) comporte au moins une, en particulier trois moulures (15) passant en direction de l'axe longitudinal (l) et **en ce que** le boîtier (5) comporte une bride (9) faisant radialement saillie vers l'intérieur.

5. Came de maintien selon l'une quelconque des revendications précédentes, **caractérisée en ce que** le profil de fixation (9, 10, 11) est polygonal, en particulier triangulaire dans un plan perpendiculaire à l'axe longitudinal (l).

6. Came de maintien selon l'une quelconque des revendications précédentes, **caractérisée en ce que** le profil de fixation (9, 10, 11) est constitué sur les faces avant du boîtier (5), opposées l'une à l'autre en direction de l'axe longitudinal (l) respectivement avec une saillie radiale (9, 10) en forme de bride.

7. Came de maintien selon la revendication 6, **caractérisée en ce qu'**une des saillies radiales (9) en forme de bride est dotée d'au moins une, en particulier de deux ouvertures (12a, 12b).

8. Came de maintien selon les revendications 6 et 7, **caractérisée en ce qu'**un conduit de type annulaire ouvert vers l'extérieur est constitué dans la saillie (9) radiale en forme de bride en partant d'une ouverture (12a, 12b) entre les saillies radiales en forme de bride (9, 10).

9. Came de maintien selon l'une quelconque des revendications précédentes, **caractérisée en ce qu'**un couvercle (19) pouvant être fixé de façon amovible sur le boîtier, qui est doté d'un côté d'une couche adhésive, est attribué au boîtier (5).

10. Came de maintien selon la revendication 9, **caractérisée en ce que** le couvercle (19) est doté de deux ouvertures de passage (20a, 20b).

11. Came de maintien selon l'une quelconque des revendications précédentes, **caractérisée en ce que** l'élément de came (6) est doté d'une surface d'appui faisant saillie radialement (14) sur laquelle s'appuie le ressort (7).

12. Système de fermeture rapide avec une came de maintien (1) selon l'une quelconque des revendications précédentes et un tourillon de fermeture (2), qui comporte un profil complémentaire ou extérieur (16, 17) pour la liaison avec le profil intérieur (13) de l'élément de came (6) ainsi qu'une zone d'appui.

13. Système de fermeture rapide selon la revendication 12, **caractérisé en ce que** la zone d'appui du tourillon de fermeture (2) est constitué conique sur le côté tourné vers le profil complémentaire ou extérieur (16, 17).

14. Système de fermeture rapide selon la revendication 12 ou 13, **caractérisé en ce que** le profil complémentaire ou extérieur du tourillon de fermeture (2) comporte au moins une came (17) faisant radialement saillie d'une zone de tourillon (16).
